# EUROPEAN PATENT APPLICATION

(11) **EP 4 583 465 A1**
(43) Date of publication of application: **09.07.2025**
(21) Application number: 22956751.6
(22) Date of filing: 29.08.2022
(51) Int. Cl.: H04L 27/00

(54) **METHOD AND APPARATUS FOR REPORTING BSR, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/115639
(87) International publication number: WO 2024/044916

(57) **Abstract**

Embodiments of the present disclosure provide a method for reporting a buffer status report (BSR). The method is executed by a terminal and comprises: transmitting a BSR comprising assistance information to an access network device, wherein the assistance information is used for assisting the access network device in executing data scheduling of a predetermined service. Therefore, after the access network device receives the BSR, the access network device can be assisted in executing data scheduling of the predetermined service on the basis of the assistance information, and compared with a mode that the access network device randomly schedules the data of the predetermined service, scheduling can be carried out on the basis of the assistance information, it can be ensured that data having a high urgency degree can be successfully decoded, and the reliability of data transmission is improved.

## Description

### TECHNICAL FIELD

The present disclosure relates to, but is not limited to, the field of wireless communication technology, and in particular, to a method and an apparatus for reporting the BSR, a communication device and a storage medium.

### BACKGROUND

The extended reality (XR) service is one of the service types supported by the network. In a scenario, the data of XR service is usually composed of a plurality of quality of service (QoS) streams, and the service volume is very large. However, the QoS stream of XR needs to meet certain delay requirements during transmission, especially some data streams need to be delivered to the server at the same time for decoding, and the delay of any QoS stream will cause failure of joint decoding of the plurality of QoS streams. Therefore, how to schedule QoS streams is a problem that needs to be considered.

### SUMMARY

The embodiments of the present disclosure disclose a method and an apparatus for reporting the BSR, a communication device and a storage medium.

According to the first aspect of the embodiment of the present disclosure, there is provided a method for reporting a BSR, performed by a terminal, and the method including:
sending a buffer status report (BSR) including assistance information to an access network device,
wherein, the assistance information is used to assist the access network device in performing data scheduling of a predefined service.

In an embodiment, the assistance information is used to indicate an urgency degree of scheduling data of the predefined service.

In an embodiment, the predefined service is an extended reality XR service.

In an embodiment, the assistance information is carried by a predetermined information field of a media access control (MAC) control unit (CE) for sending the BSR.

In an embodiment, the assistance information is associated with a predetermined logical channel identifier (LCID).

In an embodiment, the method further includes:
receiving configuration information sent by the access network device,
wherein, the configuration information is used to indicate the terminal to report the BSR.

In an embodiment, the configuration information is used to indicate one of the following:
the terminal reporting the BSR with the terminal as a granularity;
the terminal reporting the BSR with a logical channel group (LCG) as the granularity; and
the terminal reporting the BSR with a logical channel as the granularity.

In an embodiment, sending the buffer status report (BSR) including assistance information to an access network device includes:
sending the BSR to the access network device based on a reporting manner with an LCG as a granularity;
   or,
sending the BSR to the access network device based on a reporting manner with a single logical channel as the granularity.

In an embodiment, the method further includes:
sending reference information to the access network device,
wherein, the reference information indicates the terminal supporting or not supporting an ability to report the BSR; and/or, the reference information indicates the terminal expecting or not expecting to report the BSR.

According to the second aspect of the embodiment of the present disclosure, there is provided a method for reporting a BSR, performed by an access network device, and the method including:
receiving a buffer status report (BSR) including assistance information sent by a terminal;
wherein, the assistance information is used to assist the access network device in performing data scheduling of a predefined service.

In an embodiment, the predefined service is an extended reality XR service.

In an embodiment, the assistance information is used by a network to determine a scheduling priority of scheduling the data of the predefined service.

In an embodiment, the assistance information is carried by a predetermined information field of a media access control (MAC) control unit (CE) for sending the BSR.

In an embodiment, the assistance information is associated with a predetermined logical channel identifier (LCID).

In an embodiment, the method further includes:
sending configuration information to the terminal;
wherein the configuration information is used to indicate the terminal to report the BSR.

In an embodiment, the method further includes:
receiving reference information sent by the terminal;
wherein, the reference information indicates the terminal supporting or not supporting an ability to report the BSR; and/or, the reference information indicates the terminal expecting or not expecting to report the BSR;
determining the configuration information based on the reference information.

In an embodiment, the configuration information is used to indicate one of the following:
the terminal reporting the BSR with the terminal as a granularity;
the terminal reporting the BSR with a logical channel group (LCG) as the granularity; and
the terminal reporting the BSR with a logical channel as the granularity.

In an embodiment, receiving a buffer status report (BSR) including assistance information sent by a terminal includes:
receiving the BSR sent by the terminal based on a reporting manner with an LCG as a granularity;
   or,
receiving the BSR sent by the terminal based on a reporting manner with a single logical channel as the granularity.

According to the third aspect of the embodiment of the present disclosure, there is provided an apparatus for reporting a BSR, including:
a sending module, configured to send a buffer status report (BSR) including assistance information to an access network device,
wherein, the assistance information is at least used to indicate an urgency degree of scheduling data of the predefined service.

According to the fourth aspect of the embodiment of the present disclosure, there is provided an apparatus for reporting a BSR, including:
a receiving module, configured to receive a buffer status report (BSR) including assistance information sent by a terminal;
wherein, the assistance information is at least used to indicate an urgency degree of scheduling data of the predefined service.

According to the fifth aspect of the embodiment of the present disclosure, there is provided a communication device, including:
a processor; and
a memory for storing executable instructions of the processor;
wherein, the processor is configured to: implement the method described in any embodiment of the present disclosure when running the executable instructions.

According to the sixth aspect of the embodiment of the present disclosure, there is provided a computer storage medium, wherein the computer storage medium stores a computer executable program, and the executable program implements the method described in any embodiment of the present disclosure when executed by the processor.

In an embodiment of the present disclosure, a buffer status report (BSR) including assistance information is sent to an access network device, wherein, the assistance information is used to assist the access network device in performing data scheduling of a predefined service. Here, since the BSR includes assistance information indicating the urgency degree of scheduling data of the predefined service, after receiving the BSR, the access network device can schedule the data of the predefined service based on the urgency degree of scheduling data of the predefined service indicated by the assistance information for assisting the access network device in performing data scheduling of the predefined service. Compared with the manner in which the access network device randomly schedules the data of the predefined service, the data with a high urgency degree of the predefined service can be preferentially scheduled, the scheduling is performed based on the assistance information, which can ensure that the data with a high urgency degree can be successfully decoded, thereby improving the reliability of data transmission.

### BRIEF DESCRIPTION OF THE DRAWINGS

FIG. 1 is a schematic diagram of the structure of a wireless communication system according to an example embodiment.
FIG. 2 is a schematic diagram of a flow chart of a method for reporting a BSR according to an example embodiment.
FIG. 3 is a schematic diagram of an information field according to an example embodiment.
FIG. 4 is a schematic diagram of a flow chart of a method for reporting a BSR according to an example embodiment.
FIG. 5 is a schematic diagram of a flow chart of a method for reporting a BSR according to an example embodiment.
FIG. 6 is a schematic diagram of a flow chart of a method for reporting a BSR according to an example embodiment.
FIG. 7 is a schematic diagram of a flow chart of a method for reporting a BSR according to an example embodiment.
FIG. 8 is a schematic diagram of a flow chart of a method for reporting a BSR according to an example embodiment.
FIG. 9 is a schematic diagram of an apparatus for reporting a BSR according to an example embodiment.
FIG. 10 is a schematic diagram of an apparatus for reporting a BSR according to an example embodiment.
FIG. 11 is a schematic diagram of a structure of a terminal according to an example embodiment.
FIG. 12 is a block diagram of a base station according to an example embodiment.

### DETAILED DESCRIPTION

The example embodiments will be described in detail here, and examples thereof are shown in the accompanying drawings. When the following description refers to the drawings, unless otherwise indicated, the same numbers in different drawings represent the same or similar elements. The implementations described in the following example embodiments do not represent all implementations consistent with the embodiments of the present disclosure. Instead, they are merely examples of apparatuses and methods consistent with some aspects of the embodiments of the present disclosure as detailed in the appended claims.

The terms used in the embodiments of the present disclosure are only for the purpose of describing specific embodiments and are not intended to limit the embodiments of the present disclosure. The singular forms "one" and "the" used in the embodiments of the present disclosure and the appended claims are also intended to include plural forms unless the context clearly indicates otherwise. It should also be understood that the term "and/or" used herein refers to and includes any or all possible combinations of one or more associated listed items.

It should be understood that although the terms first, second, third, etc. may be used to describe various information in the embodiments of the present disclosure, these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of... ..." or "when... ..." or "in response to determining that".

For the purpose of simplicity and ease of understanding, the terms used in this article to characterize the size relationship are "greater than" or "less than". However, for those skilled in the art, it can be understood that the term "greater than" also covers the meaning of "greater than or equal to", and "less than" also covers the meaning of "less than or equal to".

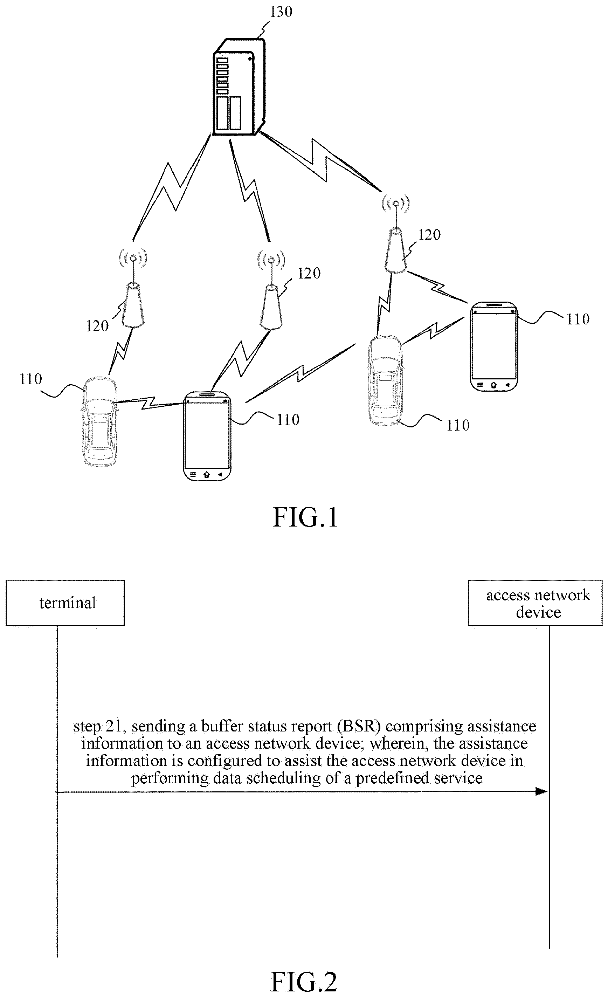

Please refer to FIG. 1, which shows a structural schematic diagram of a wireless communication system provided by an embodiment of the present disclosure. As shown in FIG. 1, the wireless communication system is a communication system based on mobile communication technology, and the wireless communication system may include: a number of user devices 110 and a number of base stations 120.

The user device 110 may be a device that provides voice and/or data connectivity to a user. The user device 110 can communicate with one or more core networks via a radio access network (RAN). The user device 110 may be an Internet of Things user device, such as a sensor device, a mobile phone, and a computer with an Internet of Things user device, for example, it may be a fixed, portable, pocket-sized, handheld, computer built-in, or vehicle-mounted apparatus, for example, a station (STA), a subscriber unit, a subscriber station, a mobile station, a mobile, a remote station, an access point, a remote terminal, an access terminal, a user terminal, a user agent, a user device, or user equipment. Alternatively, the user device 110 may also be a device of an unmanned aerial vehicle. Alternatively, the user device 110 may also be a vehicle-mounted device, such as a driving computer with wireless communication functions, or a wireless user device connected to an external driving computer. Alternatively, the user device 110 may also be a roadside device, such as a street lamp, a signal lamp or other roadside devices with wireless communication functions.

The base station 120 may be a network-side device in a wireless communication system. The wireless communication system may be a 4th generation mobile communication technology (4G) system, also known as a long term evolution (LTE) system; or, the wireless communication system may be a 5G system, also known as a new air interface system or a 5G NR system. Alternatively, the wireless communication system may be a next generation system of the 5G system. The access network in the 5G system may be referred to as New Generation-Radio Access Network (NG-RAN).

The base station 120 may be an evolved base station (eNB) used in a 4G system. Alternatively, the base station 120 may also be a base station (gNB) using a centralized distributed architecture in a 5G system. When the base station 120 uses a centralized distributed architecture, it generally includes a central unit (CU) and at least two distributed units (DU). The central unit is provided with a protocol stack of a packet data convergence protocol (PDCP) layer, a radio link layer control protocol (RLC) layer, and a media access control (MAC) layer; the distributed unit is provided with a protocol stack of a physical (PHY) layer. The specific implementation method of the base station 120 is not limited in the embodiment of the present disclosure.

A wireless connection can be established between the base station 120 and the user device 110 through a wireless air interface. In different implementations, the wireless air interface is a wireless air interface based on the fourth generation mobile communication network technology (4G) standard; or, the wireless air interface is a wireless air interface based on the fifth generation mobile communication network technology (5G) standard, for example, the wireless air interface is a new air interface; or, the wireless air interface can also be a wireless air interface based on the next generation mobile communication network technology standard of 5G.

**In** some embodiments, an E2E (End to End) connection can also be established between the user devices 110, for example, scenarios such as V2V (vehicle to vehicle) communication, V2I (vehicle to infrastructure) communication and V2P (vehicle to pedestrian) communication in vehicle to everything (V2X) communication.

Here, the above user device can be considered as the terminal device in the following embodiments.

**In** some embodiments, the wireless communication system may further include a network management device 130.

Several base stations 120 are respectively connected to the network management device 130. The network management device 130 may be a core network device in the wireless communication system, for example, the network management device 130 may be a mobility management entity (MME) in the Evolved Packet Core (EPC). Alternatively, the network management device may also be other core network devices, such as a Serving GateWay (SGW), a Public Data Network GateWay (PGW), a Policy and Charging Rules Function (PCRF) or a Home Subscriber Server (HSS), or the like. The embodiment of the present disclosure does not limit the implementation form of the network management device 130.

In order to facilitate the understanding of those skilled in the art, the embodiment of the present disclosure lists a plurality of implementations to clearly illustrate the technical solution of the embodiment of the present disclosure. Those skilled in the art can understand that, the plurality of embodiments provided in the embodiments of the present disclosure can be executed separately, or can be executed together in combination with the methods of other embodiments in the embodiments of the present disclosure, or can also be executed separately or conjunctively in combination with some methods in other related technologies; the embodiments of the present disclosure do not limit this.

As shown in FIG. 2, a method for reporting a BSR is provided in the present embodiment, wherein the method is executed by a terminal, and the method includes:
step 21, sending a buffer status report (BSR) including assistance information to an access network device,
wherein, the assistance information is used to assist the access network device in performing data scheduling of a predefined service.

In one embodiment, the assistance information is used to indicate an urgency degree of scheduling data of the predefined service. In one embodiment, the assistance information is at least used to indicate: the delay budget information (delay buget) of scheduling data of the predefined service. The delay budget information can be duration information, for example, 1ms.

Here, the terminal involved in the present disclosure can be but is not limited to a mobile phone, a wearable device, a vehicle-mounted terminal, a road side unit (RSU,), a smart home terminal, an industrial sensor device and/or a medical device, etc. In some embodiments, the terminal may be a Redcap terminal or a new air interface NR terminal of a predetermined version (e.g., an NR terminal of R17).

The access network device involved in the present disclosure may be a base station, and the base station may be various types of base stations, such as a base station of a third generation mobile communication (3G) network, a base station of a fourth generation mobile communication (4G) network, a base station of a fifth generation mobile communication (5G) network, or other evolved base stations.

In one embodiment, the assistance information indicates one of the following:
a high level of urgency;
a medium level of urgency; and
a low level of urgency.

For example, "index0" may indicate a high level of urgency; "index1" may indicate a medium level of urgency; and "index2" may indicate a low level of urgency. It should be noted that, if the assistance information indicates null, it may be determined as a low level of urgency.

In one embodiment, the assistance information indicates the delay budget information of scheduling the data of the predefined service;
in one embodiment, the delay budget information may be quantified and then reported. Here, a mapping relationship between an identifier and a duration may be established, and different identifiers may indicate different durations.

For example, the index "index0" may indicate that the delay budget is within range 1 (e.g., 0 to 10 ms); the index "index1" may indicate that the delay budget is within range 2 (e.g., 10 to 20 ms); and the index "index2" may indicate that the delay budget is within range 3 (e.g., 20 to 30 ms).

The specific delay budget information corresponding to the index or code point may be notified by the network in advance or agreed upon by a protocol.

In one embodiment, the urgency degree of scheduling data may be determined according to the delay requirement of transmitting data of a predefined service. For example, in response to the delay requirement of transmitting data of a predefined service being less than a delay threshold, it is determined that the urgency degree of scheduling the data is greater than a reference urgency level; or, in response to the delay requirement of transmitting data of a predefined service being greater than a delay threshold, it is determined that the urgency degree of scheduling the data is less than a reference urgency level.

In one embodiment, the access layer of the terminal may obtain assistance information from the non-access layer or the service layer.

In one embodiment, the terminal determines the assistance information based on implementation.

In one embodiment, the assistance information is obtained, wherein the assistance information is at least used to indicate: an urgency degree of scheduling data of the predefined service. A buffer status report BSR including the assistance information is sent to the access network device.

In one embodiment, the assistance information is obtained, wherein the assistance information is at least used to indicate: the urgency degree of scheduling a plurality of QoS data streams of the XR service. A buffer status report BSR including the assistance information is sent to the access network device.

In one embodiment, the assistance information is obtained, wherein the assistance information is at least used to indicate: the urgency degree of scheduling different data in a QoS data stream of the XR service. A buffer status report BSR including the assistance information is sent to the access network device.

In one embodiment, the assistance information is obtained, wherein the assistance information is at least used to indicate: the urgency degree of scheduling different data in the same logical channel of the XR service. A buffer status report BSR including the assistance information is sent to the access network device.

In one embodiment, a buffer status report BSR including the assistance information is sent to the access network device; wherein the assistance information is at least used to indicate: the urgency degree of scheduling the data of the predefined service; the assistance information is used by the network to determine the scheduling priority of scheduling the data of the predefined service. It should be noted that, the higher the scheduling priority of the data, the data will be scheduled first. The scheduling priority can be positively correlated with the urgency degree, for example, the higher the urgency degree is, the higher the scheduling priority is.

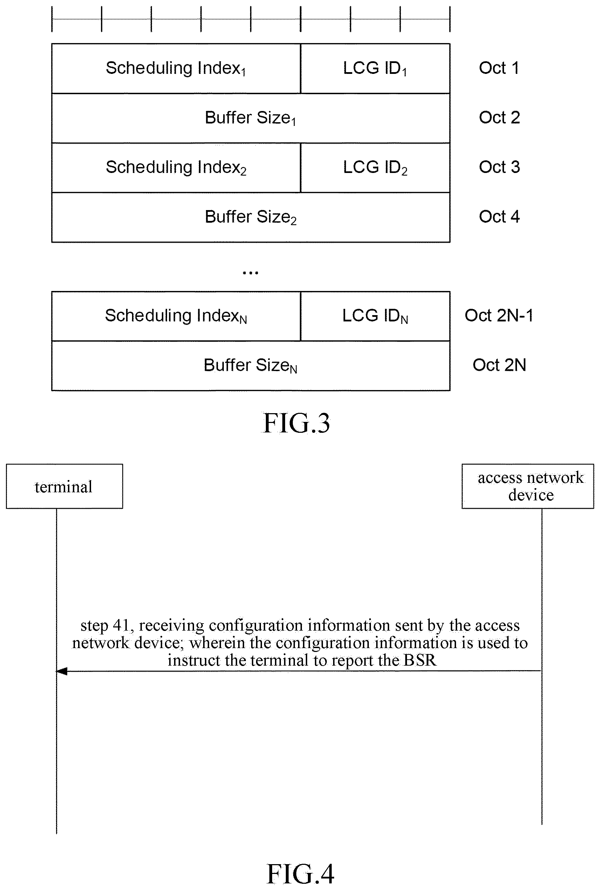

In one embodiment, the assistance information is carried by a predetermined information field of a media access control (MAC) control unit (CE) for sending the BSR. For example, referring to FIG. 3, an extended field, namely, a scheduling indication Scheduling Index_{N}, is added on the basis of the information field for sending the BSR in the related art, to indicate the urgency degree or the delay budget of scheduling data of the predefined service and other information, wherein N is an integer greater than or equal to 1. It should be noted that, the Scheduling Index_{N} corresponding to different N values can be associated with different logical channel groups (LCGs), and different LCGs can be indicated by different identifiers IDs, such as LCG ID₁ and LCG ID₂.

In one embodiment, the assistance information is associated with a predetermined logical channel identifier LCID. In one embodiment, an extended logical channel identifier LCID can be added to indicate reporting of an extended BSR (i.e., the BSR includes assistance information). For example, a reserved LCID can be used to indicate reporting of an extended BSR.

In one embodiment, configuration information sent by the access network device is received, wherein, the configuration information is used to indicate the terminal to report the BSR. The buffer status report (BSR) including assistance information is sent to an access network device, wherein the assistance information is at least used to indicate: the urgency degree or the delay budget of scheduling data of the predefined service and other information.

In one embodiment, configuration information sent by the access network device is received, wherein the configuration information is used to indicate one of the following: the terminal reporting the BSR with the terminal as a granularity; the terminal reporting the BSR with a logical channel group (LCG) as the granularity; and the terminal reporting the BSR with a logical channel as the granularity. The buffer status report (BSR) including assistance information is sent to an access network device, wherein the assistance information is at least used to indicate: the urgency degree or the delay budget of scheduling data of the predefined service and other information.

It should be noted that, in the scenario where the reporting is performed at the granularity of the terminal, if the base station determines that the terminal is a terminal for performing the XR service, the terminal needs to use the extended BSR reporting format to report the BSR, that is, the BSR needs to include the assistance information.

It should be noted that, in the scenario where the reporting is performed at the granularity of the logical channel group LCG, if the base station determines that the terminal is a terminal for performing the XR service, the terminal is notified that the specific LCG needs to use the extended BSR reporting format, while LCGs other than the specific LCG still use the BSR reporting format without the extension. The extended BSR reporting format means that the BSR needs to include the assistance information. In one embodiment, when the base station configures the logical channel group, it may configure the LCG to use an extended Buffer Status Report (BSR) for BSR reporting.

It should be noted that, in the scenario where the BSR is reported at the granularity of the logical channel, if the base station determines that the terminal is a terminal for performing the XR service, the terminal is notified that the specific logical channel needs to use the extended BSR reporting format.

In one embodiment, the BSR is sent to the access network device based on the reporting manner with the LCG as the granularity; wherein the assistance information is at least used to indicate: the urgency degree or the delay budget of scheduling data of the predefined service and other information.

It should be noted that, when the base station configures the logical channel, the BSR reporting on the logical channel is configured to use the extended BSR reporting, and the BSR reporting on the LCG to which the logical channel belongs uses the extended BSR reporting.

In one embodiment, if the BSR reporting is based on the LCG reporting, any logical channel configured to use the extended BSR reporting will make the BSR reporting on the LCG use the extended BSR reporting.

In one embodiment, if the BSR reporting is based on the LCG reporting, all logical channels configured to use the extended BSR reporting will make the BSR reporting on the LCG use the extended BSR reporting.

In one embodiment, the BSR is sent to the access network device based on a reporting manner with a single logical channel as the granularity, wherein the assistance information is at least used to indicate: the urgency degree or the delay budget of scheduling data of the predefined service and other information.

In one embodiment, when configuring the logical channel, the base station configures the BSR reporting on the logical channel to use the extended BSR reporting, and at this time, the logical channel reporting will conduct the reporting using the extended BSR reporting.

In one embodiment, reference information is sent to the access network device, wherein, the reference information indicates the terminal supporting or not supporting an ability to report the BSR; and/or, the reference information indicates the terminal expecting or not expecting to report the BSR. The configuration information sent by the access network device is received, wherein, the configuration information is used to indicate the terminal to report the BSR. The buffer status report (BSR) including assistance information is sent to an access network device, wherein the assistance information is used to indicate an urgency degree of scheduling data of the predefined service.

In an embodiment of the present disclosure, a buffer status report (BSR) including assistance information is sent to an access network device, wherein, the assistance information is used to assist the access network device in performing data scheduling of a predefined service. Here, since the BSR includes assistance information indicating the urgency degree of scheduling data of the predefined service, after receiving the BSR, the access network device can schedule the data of the predefined service based on the urgency degree of scheduling data of the predefined service indicated by the assistance information for assisting the access network device in performing data scheduling of the predefined service. Compared with the manner in which the access network device randomly schedules the data of the predefined service, the data with a high urgency degree of the predefined service can be preferentially scheduled, the scheduling is performed based on the assistance information, which can ensure that the data with a high urgency degree can be successfully decoded, thereby improving the reliability of data transmission.

It should be noted that, those skilled in the art can understand that the method provided in the embodiment of the present disclosure can be executed alone or together with some methods in the embodiment of the present disclosure or some methods in related technologies.

As shown in FIG. 4, a method for reporting a BSR is provided in the present embodiment, wherein the method is executed by a terminal, and the method includes:
step 41, receiving configuration information sent by the access network device;
wherein the configuration information is used to instruct the terminal to report the BSR.

In one embodiment, configuration information sent by the access network device is received, wherein, the configuration information is used to indicate the terminal to report the BSR. The buffer status report (BSR) including assistance information is sent to an access network device, wherein the assistance information is at least used to indicate: the urgency degree or the delay budget of scheduling data of the predefined service and other information.

In one embodiment, configuration information sent by the access network device is received, wherein the configuration information is used to indicate one of the following: the terminal reporting the BSR with the terminal as a granularity; the terminal reporting the BSR with a logical channel group (LCG) as the granularity; and the terminal reporting the BSR with a logical channel as the granularity. The buffer status report (BSR) including assistance information is sent to an access network device, wherein the assistance information is at least used to indicate: the urgency degree or the delay budget of scheduling data of the predefined service and other information.

It should be noted that, in the scenario where the reporting is performed at the granularity of the terminal, if the base station determines that the terminal is a terminal for performing the XR service, the terminal needs to use the extended BSR reporting format to report the BSR, that is, the BSR needs to include the assistance information.

It should be noted that, in the scenario where the reporting is performed at the granularity of the logical channel group LCG, if the base station determines that the terminal is a terminal for performing the XR service, the terminal is notified that the specific LCG needs to use the extended BSR reporting format, while LCGs other than the specific LCG still use the BSR reporting format without the extension. The extended BSR reporting format means that the BSR needs to include the assistance information. In one embodiment, when the base station configures the logical channel group, it may configure the LCG to use an extended Buffer Status Report (BSR) for BSR reporting.

It should be noted that, in the scenario where the BSR is reported at the granularity of the logical channel, if the base station determines that the terminal is a terminal for performing the XR service, the terminal is notified that the specific logical channel needs to use the extended BSR reporting format.

It should be noted that, those skilled in the art can understand that the method provided in the embodiment of the present disclosure can be executed alone or together with some methods in the embodiment of the present disclosure or some methods in related technologies.

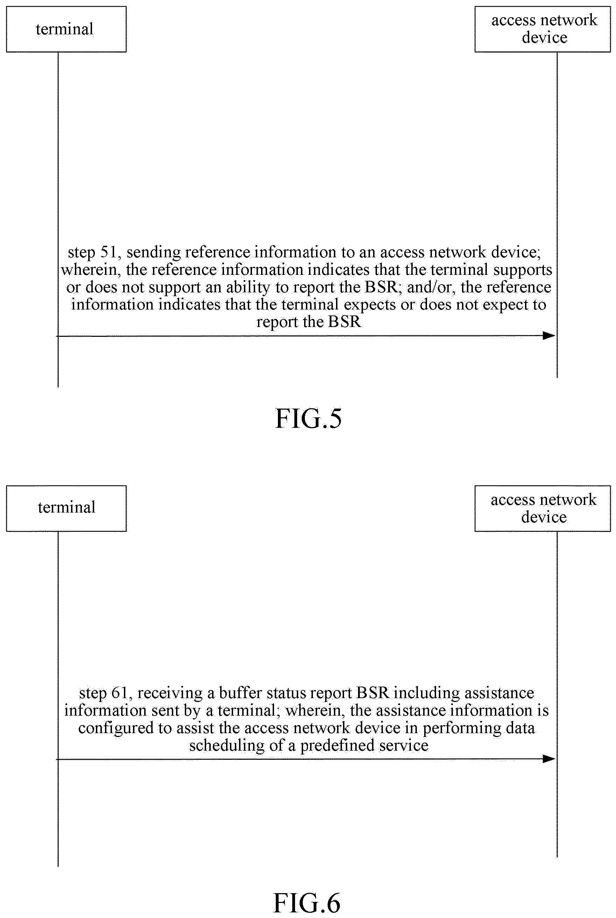

As shown in FIG. 5, a method for reporting a BSR is provided in this embodiment, wherein the method is executed by a terminal, and the method includes:
step 51, sending reference information to an access network device;
wherein, the reference information indicates the terminal supporting or not supporting an ability to report the BSR; and/or, the reference information indicates the terminal expecting or not expecting to report the BSR.

In one embodiment, reference information is sent to the access network device, wherein, the reference information indicates the terminal supporting or not supporting an ability to report the BSR; and/or, the reference information indicates the terminal expecting or not expecting to report the BSR. The configuration information sent by the access network device is received, wherein, the configuration information is used to indicate the terminal to report the BSR. The buffer status report (BSR) including assistance information is sent to an access network device, wherein the assistance information is used to indicate an urgency degree or the delay budget of scheduling data of the predefined service and other information.

It should be noted that, those skilled in the art can understand that the method provided in the embodiment of the present disclosure can be executed alone or together with some methods in the embodiment of the present disclosure or some methods in related technologies.

As shown in FIG. 6, a method for reporting a BSR is provided in this embodiment, wherein the method is performed by an access network device, and the method includes:
step 61, receiving a buffer status report BSR including assistance information sent by a terminal;
wherein, the assistance information is used to assist the access network device in performing data scheduling of a predefined service.

In one embodiment, the assistance information is at least configured to indicate an urgency degree of scheduling data of the predefined service.

In one embodiment, the assistance information is at least used to indicate: the delay budget information (delay buget) of scheduling data of the predefined service. The delay budget information can be duration information, for example, 1ms.

Here, the terminal involved in the present disclosure can be but is not limited to a mobile phone, a wearable device, a vehicle-mounted terminal, a road side unit (RSU,), a smart home terminal, an industrial sensor device and/or a medical device, etc. In some embodiments, the terminal may be a Redcap terminal or a new air interface NR terminal of a predetermined version (e.g., an NR terminal of R17).

The access network device involved in the present disclosure may be a base station, and the base station may be various types of base stations, such as a base station of a third generation mobile communication (3G) network, a base station of a fourth generation mobile communication (4G) network, a base station of a fifth generation mobile communication (5G) network, or other evolved base stations.

In one embodiment, the assistance information indicates one of the following:
a high level of urgency;
a medium level of urgency; and
a low level of urgency.

For example, "index0" may indicate a high level of urgency; "index1" may indicate a medium level of urgency; and "index2" may indicate a low level of urgency. It should be noted that, if the assistance information indicates null, it may be determined as a low level of urgency.

In one embodiment, the assistance information indicates the delay budget information of scheduling the data of the predefined service;
in one embodiment, the delay budget information may be quantified and then reported. Here, a mapping relationship between an identifier and a duration may be established, and different identifiers may indicate different durations.

For example, the index "index0" may indicate that the delay budget is within range 1 (e.g., 0 to 10 ms); the index "index1" may indicate that the delay budget is within range 2 (e.g., 10 to 20 ms); and the index "index2" may indicate that the delay budget is within range 3 (e.g., 20 to 30 ms).

The specific delay budget information corresponding to the index or code point may be notified by the network in advance or agreed upon by a protocol.

In one embodiment, the urgency degree of scheduling data may be determined according to the delay requirement of transmitting data of a predefined service. For example, in response to the delay requirement of transmitting data of a predefined service being less than a delay threshold, it is determined that the urgency degree of scheduling the data is greater than a reference urgency level; or, in response to the delay requirement of transmitting data of a predefined service being greater than a delay threshold, it is determined that the urgency degree of scheduling the data is less than a reference urgency level.

In one embodiment, the access layer of the terminal may obtain assistance information from the non-access layer or the service layer.

In one embodiment, the terminal determines the assistance information based on implementation.

In one embodiment, a buffer status report (BSR) including assistance information sent by a terminal is received, wherein the assistance information is at least used to indicate: the urgency degree of scheduling a plurality of QoS data streams of the XR service.

In one embodiment, a buffer status report (BSR) including assistance information sent by a terminal is received, wherein the assistance information is at least used to indicate: the urgency degree of scheduling different data in a QoS data stream of the XR service.

In one embodiment, a buffer status report (BSR) including assistance information sent by a terminal is received, wherein the assistance information is at least used to indicate: the urgency degree of scheduling different data in the same logical channel of the XR service.

In one embodiment, a buffer status report (BSR) including assistance information sent by a terminal is received, wherein the assistance information is at least used to indicate: the urgency degree of scheduling the data of the predefined service; the scheduling priority of scheduling the data of the predefined service is determined based on the assistance information. It should be noted that, the higher the scheduling priority of the data, the data will be scheduled first. The scheduling priority can be positively correlated with the urgency degree, for example, the higher the urgency degree is, the higher the scheduling priority is.

In one embodiment, the assistance information is carried by a predetermined information field of a media access control (MAC) control unit (CE) for sending the BSR. For example, still referring to FIG. 3, an extended field, namely, a scheduling indication Scheduling Index_{N}, is added on the basis of the information field for sending the BSR in the related art, to indicate the urgency degree or the delay budget of scheduling data of the predefined service and other information, wherein N is an integer greater than or equal to 1. It should be noted that, the Scheduling Index_{N} corresponding to different N values can be associated with different logical channel groups (LCGs), and different LCGs can be indicated by different identifiers IDs, such as LCG ID₁ and LCG ID₂.

In one embodiment, the assistance information is associated with a predetermined logical channel identifier LCID. In one embodiment, an extended logical channel identifier LCID can be added to indicate reporting of an extended BSR (i.e., the BSR includes assistance information). For example, a reserved LCID can be used to indicate reporting of an extended BSR.

In one embodiment, configuration information is sent to the terminal, wherein, the configuration information is used to indicate the terminal to report the BSR. The buffer status report (BSR) including assistance information is sent to an access network device, wherein the assistance information is at least used to indicate: the urgency degree or the delay budget of scheduling data of the predefined service and other information.

In one embodiment, configuration information is sent to the terminal, wherein the configuration information is used to indicate one of the following: the terminal reporting the BSR with the terminal as a granularity; the terminal reporting the BSR with a logical channel group (LCG) as the granularity; and the terminal reporting the BSR with a logical channel as the granularity. The buffer status report (BSR) including assistance information is sent to an access network device, wherein the assistance information is at least used to indicate: the urgency degree or the delay budget of scheduling data of the predefined service and other information.

It should be noted that, in the scenario where the reporting is performed at the granularity of the terminal, if the base station determines that the terminal is a terminal for performing the XR service, the terminal needs to use the extended BSR reporting format to report the BSR, that is, the BSR needs to include the assistance information.

It should be noted that, in the scenario where the reporting is performed at the granularity of the logical channel group LCG, if the base station determines that the terminal is a terminal for performing the XR service, the terminal is notified that the specific LCG needs to use the extended BSR reporting format, while LCGs other than the specific LCG still use the BSR reporting format without the extension. The extended BSR reporting format means that the BSR needs to include the assistance information. In one embodiment, when the base station configures the logical channel group, it may configure the LCG to use an extended Buffer Status Report (BSR) for BSR reporting.

It should be noted that, in the scenario where the BSR is reported at the granularity of the logical channel, if the base station determines that the terminal is a terminal for performing the XR service, the terminal is notified that the specific logical channel needs to use the extended BSR reporting format.

In one embodiment, the BSR sent by the terminal based on the reporting manner with the LCG as the granularity is received; wherein the assistance information is at least used to indicate: the urgency degree or the delay budget of scheduling data of the predefined service and other information.

It should be noted that, when the base station configures the logical channel, the BSR reporting on the logical channel is configured to use the extended BSR reporting, and the BSR reporting on the LCG to which the logical channel belongs uses the extended BSR reporting.

In one embodiment, if the BSR reporting is based on the LCG reporting, any logical channel configured to use the extended BSR reporting will make the BSR reporting on the LCG use the extended BSR reporting.

In one embodiment, if the BSR reporting is based on the LCG reporting, all logical channels configured to use the extended BSR reporting will make the BSR reporting on the LCG use the extended BSR reporting.

In one embodiment, the BSR sent by the terminal based on a reporting manner with a single logical channel as the granularity is received, wherein the assistance information is at least used to indicate: the urgency degree or the delay budget of scheduling data of the predefined service and other information.

In one embodiment, when configuring the logical channel, the base station configures the BSR reporting on the logical channel to use the extended BSR reporting, and at this time, the logical channel reporting will conduct the reporting using the extended BSR reporting.

In one embodiment, reference information sent by the terminal is received, wherein, the reference information indicates the terminal supporting or not supporting an ability to report the BSR; and/or, the reference information indicates the terminal expecting or not expecting to report the BSR. The configuration information is determined based on the reference information. The configuration information is sent to terminal, wherein, the configuration information is used to indicate the terminal to report the BSR. The buffer status report (BSR) including assistance information sent by the terminal is received, wherein the assistance information is used to indicate an urgency degree of scheduling data of the predefined service.

It should be noted that, those skilled in the art can understand that the method provided in the embodiment of the present disclosure can be executed alone or together with some methods in the embodiment of the present disclosure or some methods in related technologies.

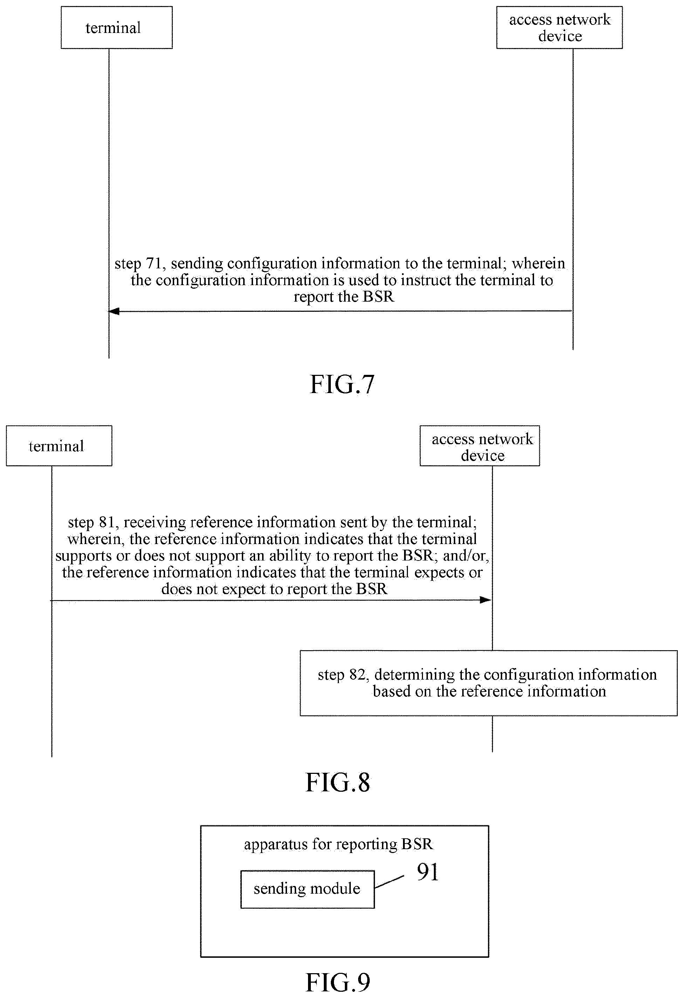

As shown in FIG. 7, a method for reporting a BSR is provided in this embodiment, wherein the method is executed by an access network device, and the method includes:
step 71, sending configuration information to the terminal;
wherein the configuration information is used to instruct the terminal to report the BSR.

In one embodiment, configuration information is sent to the terminal, wherein, the configuration information is used to indicate the terminal to report the BSR. The buffer status report (BSR) including assistance information is sent to an access network device, wherein the assistance information is at least used to indicate: the urgency degree of scheduling data of the predefined service.

In one embodiment, configuration information is sent to the terminal, wherein the configuration information is used to indicate one of the following: the terminal reporting the BSR with the terminal as a granularity; the terminal reporting the BSR with a logical channel group (LCG) as the granularity; and the terminal reporting the BSR with a logical channel as the granularity. The buffer status report (BSR) including assistance information is sent to an access network device, wherein the assistance information is at least used to indicate: the urgency degree or the delay budget of scheduling data of the predefined service and other information.

It should be noted that, in the scenario where the reporting is performed at the granularity of the terminal, if the base station determines that the terminal is a terminal for performing the XR service, the terminal needs to use the extended BSR reporting format to report the BSR, that is, the BSR needs to include the assistance information.

It should be noted that, in the scenario where the reporting is performed at the granularity of the logical channel group LCG, if the base station determines that the terminal is a terminal for performing the XR service, the terminal is notified that the specific LCG needs to use the extended BSR reporting format, while LCGs other than the specific LCG still use the BSR reporting format without the extension. The extended BSR reporting format means that the BSR needs to include the assistance information. In one embodiment, when the base station configures the logical channel group, it may configure the LCG to use an extended Buffer Status Report (BSR) for BSR reporting.

It should be noted that, in the scenario where the BSR is reported at the granularity of the logical channel, if the base station determines that the terminal is a terminal for performing the XR service, the terminal is notified that the specific logical channel needs to use the extended BSR reporting format.

It should be noted that, those skilled in the art can understand that the method provided in the embodiment of the present disclosure can be executed alone or together with some methods in the embodiment of the present disclosure or some methods in related technologies.

As shown in FIG. 8, a method for reporting a BSR is provided in this embodiment, wherein the method is executed by an access network device, and the method includes:
step 81, receiving reference information sent by the terminal;
wherein, the reference information indicates the terminal supporting or not supporting an ability to report the BSR; and/or, the reference information indicates the terminal expecting or not expecting to report the BSR;
step 82, determining the configuration information based on the reference information.

In one embodiment, reference information sent by the terminal is received, wherein, the reference information indicates the terminal supporting or not supporting an ability to report the BSR; and/or, the reference information indicates the terminal expecting or not expecting to report the BSR. The configuration information is determined based on the reference information. The configuration information is sent to terminal, wherein, the configuration information is used to indicate the terminal to report the BSR. The buffer status report (BSR) including assistance information sent by the terminal is received, wherein the assistance information is used to indicate the urgency degree delay or budget of scheduling data of the predefined service and other information.

It should be noted that, those skilled in the art can understand that the method provided in the embodiment of the present disclosure can be executed alone or together with some methods in the embodiment of the present disclosure or some methods in related technologies.

As shown in FIG. 9, an apparatus for reporting BSR is provided in the embodiment of the present disclosure, wherein the apparatus includes:
a sending module 91, configured to send a buffer status report (BSR) including assistance information to an access network device,
wherein, the assistance information is used to assist the access network device in performing data scheduling of a predefined service.

It should be noted that, those skilled in the art can understand that the method provided in the embodiment of the present disclosure can be executed alone or together with some methods in the embodiment of the present disclosure or some methods in related technologies.

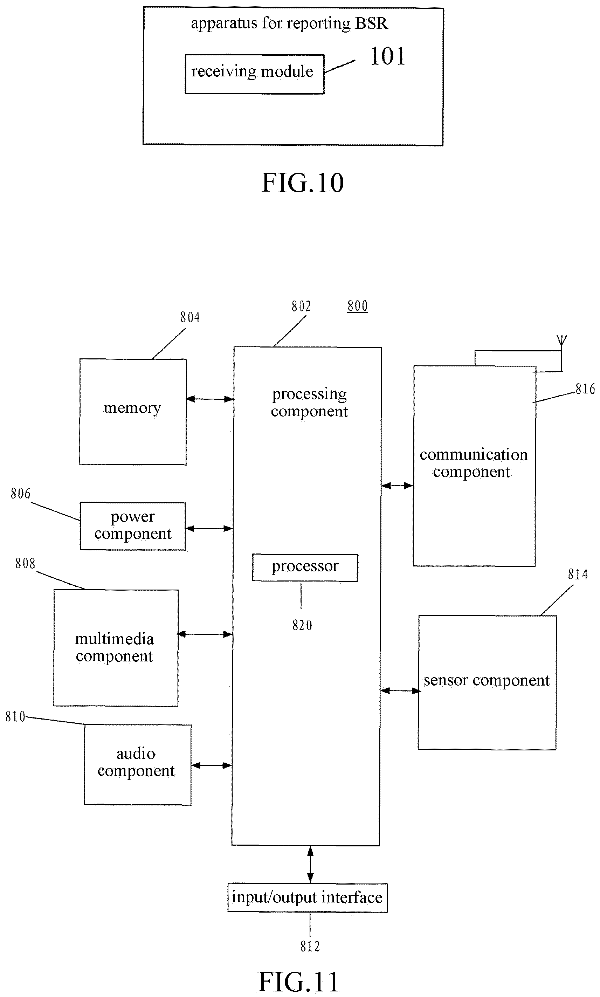

As shown in FIG. 10, an apparatus for reporting BSR is provided in the embodiment of the present disclosure, wherein the apparatus includes:
a receiving module 101, configured to receive a buffer status report (BSR) including assistance information sent by a terminal;
wherein, the assistance information is used to assist the access network device in performing data scheduling of a predefined service.

It should be noted that, those skilled in the art can understand that the method provided in the embodiment of the present disclosure can be executed alone or together with some methods in the embodiment of the present disclosure or some methods in related technologies.

The embodiment of the present disclosure provides a communication device, the communication device including:
a processor; and
a memory for storing instructions executable by the processor;
wherein, the processor is configured to: implement the method applied to any embodiment of the present disclosure when running the executable instructions.

The processor may include various types of storage media, the storage medium is a non-transitory computer storage medium, and can continue to memorize the information stored thereon after the communication device is powered off.

The processor can be connected to the memory through a bus, etc., for reading the executable program stored on the memory.

The embodiment of the present disclosure also provides a computer storage medium, wherein the computer storage medium stores a computer executable program, and the executable program implements the method of any embodiment of the present disclosure when executed by the processor.

Regarding the apparatus in the above embodiment, the specific manner in which each module performs the operation has been described in detail in the embodiment of the method, and will not be elaborated here.

As shown in FIG. 11, an embodiment of the present disclosure provides a structure of a terminal.

Referring to FIG. 11, a terminal 800 is provided by this embodiment. Specifically, the terminal may be a mobile phone, a computer, a digital broadcast terminal, a messaging device, a game console, a tablet device, a medical device, a fitness device, a personal digital assistant, etc.

Referring to FIG. 11, the terminal 800 may include at least one or more of the following components: a processing component 802, a memory 804, a power component 806, a multimedia component 808, an audio component 810, an input/output (I/O) interface 812, a sensor component 814, and a communication component 816.

The processing component 802 typically controls the overall operations of the terminal 800, such as the operations associated with display, telephone calls, data communications, camera operations, and recording operations. The processing component 802 can include one or more processors 820 to execute instructions to perform all or part of the steps in the above described methods. Moreover, the processing component 802 can include one or more modules to facilitate the interaction between the processing component 802 and other components. For example, the processing component 802 can include a multimedia module to facilitate the interaction between the multimedia component 808 and the processing component 802.

The memory 804 is configured to store various types of data to support the operation of the terminal 800. Examples of such data include instructions for any application or method operated on the terminal 800, the contact data, the phone book data, messages, pictures, videos, and the like. The memory 804 can be implemented by any type of volatile or non-volatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 can include a power management system, one or more power sources, and other components associated with the generation, management, and distribution of power for the terminal 800.

The multimedia component 808 includes a screen providing an output interface between the terminal 800 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors may not only sense a boundary of a touch or swipe action, but also detect the duration time and pressure associated with the touch or swipe action. In some embodiments, the multimedia component 808 includes a front camera and/or a rear camera. When the terminal 800 is in an operation mode, such as a photographing mode or a video mode, the front camera and/or the rear camera can receive external multimedia data. Each of the front camera and the rear camera may be a fixed optical lens system or have focus and optical zoom capability.

The audio component 810 is configured to output and/or input an audio signal. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or sent via the communication component 816. In some embodiments, the audio component 810 also includes a speaker for outputting the audio signal.

The I/O interface 812 provides an interface between the processing component 802 and peripheral interface modules, such as keyboards, a click wheels, buttons, and the like. These buttons may include, but not limited to, a home button, a volume button, a starting button, and a locking button.

The sensor component 814 includes one or more sensors for providing state assessments of various aspects of the terminal 800. For example, the sensor component 814 can detect an open/closed state of the device 800, relative positioning of components, such as the display and the keypad of the terminal 800. The sensor component 814 can also detect a change in position of one component of the terminal 800 or the terminal 800, the presence or absence of user contact with the terminal 800, an orientation, or an acceleration/deceleration of the terminal 800, and a change in temperature of the terminal 800. The sensor component 814 can also include a proximity sensor configured to detect the presence of nearby objects without any physical contact. The sensor component 814 can also include a light sensor, such as a CMOS or CCD image sensor, configured to use in imaging applications. In some embodiments, the sensor component 814 can also include an accelerometer sensor, a gyroscope sensor, a magnetic sensor, a pressure sensor, or a temperature sensor.

The communication component 816 is configured to facilitate wired or wireless communication between the terminal 800 and other devices. The terminal 800 can access a wireless network based on a communication standard, such as Wi-Fi, 2G, 3G, or a combination thereof. In an example embodiment, the communication component 816 receives broadcast signals or broadcast associated information from an external broadcast management system via a broadcast channel. In an example embodiment, the communication component 816 also includes a near field communication (NFC) module to facilitate short-range communications. For example, the NFC module can be implemented based on radio frequency identification (RFID) technology, infrared data association (IrDA) technology, ultra-wideband (UWB) technology, Bluetooth (BT) technology and other technologies.

**In** an example embodiment, the terminal 800 may be implemented with one or more application specific integrated circuits (ASIC), digital signal processors (DSP), digital signal processing devices (DSPD), programmable logic devices (PLD), field programmable Gate arrays (FPGA), controllers, microcontrollers, microprocessors or other electronic components, to perform the above methods.

**In** an example embodiment, a non-transitory computer-readable storage medium including instructions is also provided, such as a memory 804 including instructions, and the above instructions can be executed by the processor 820 of the terminal 800 to complete the above method. For example, the non-transitory computer-readable storage medium can be a ROM, a random access memory (RAM), a CD-ROM, a magnetic tape, a floppy disk, and an optical data storage device.

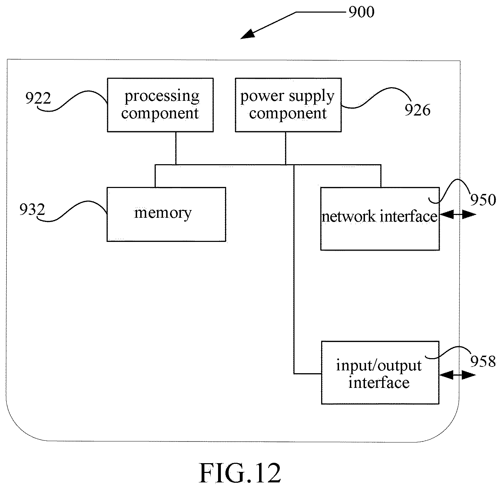

As shown in FIG. 12, a structure of a base station is provided in an embodiment of the present disclosure. For example, the base station 900 may be provided as a network side device 900. Referring to FIG. 12, the base station 900 may include a processing component 922, which further includes one or more processors, and memory resources represented by a memory 932, for storing instructions, such as application programs, that can be executed by processing component 922. An application stored in memory 932 may include one or more modules, each of which corresponds to a set of instructions. In addition, the processing component 922 is configured to execute instructions to execute any of the above methods applied to the base station.

The base station 900 may also include a power supply component 926 configured to perform power management of the base station 900, a wired or wireless network interface 950 configured to connect the base station 900 to the network, and an input/output (I/O) interface 958. The base station 900 may operate based on an operating system stored in the memory 932, such as Windows Server TM, Mac OS X TM, Unix TM, Linux TM, FreeBSD TM or the like.

Other embodiments of the present disclosure will easily occur to those skilled in the art after considering the specification and practicing the disclosure disclosed herein. The present disclosure is intended to cover any variation, use or adaptation of the present disclosure, which follows the general principles of the present disclosure and includes common sense or common technical means in the technical field not disclosed in this disclosure. The specification and embodiments are to be regarded as example only, with the true scope and spirit of the disclosure being indicated by the attached claims.

It should be understood that the present disclosure is not limited to the precise structure described above and shown in the drawings, and various modifications and changes can be made without departing from its scope. The scope of the present disclosure is limited only by the appended claims.

## Claims

1. A method for reporting a BSR, performed by a terminal, and the method comprising:
sending a buffer status report (BSR) comprising assistance information to an access network device,
wherein the assistance information assists the access network device in performing data scheduling of a predefined service.

2. The method according to claim 1, wherein the assistance information indicates an urgency degree of scheduling data of the predefined service.

3. The method according to claim 1, wherein the predefined service is an extended reality XR service.

4. The method according to claim 1, wherein the assistance information is carried by a predetermined information field of a media access control (MAC) control unit (CE) for sending the BSR.

5. The method according to claim 4, wherein the assistance information is associated with a predetermined logical channel identifier (LCID).

6. The method according to claim 1, further comprising:
receiving configuration information sent by the access network device,
wherein the configuration information indicates the terminal to report the BSR.

7. The method according to claim 6, wherein the configuration information indicates one of:
the terminal reporting the BSR with the terminal as a granularity;
the terminal reporting the BSR with a logical channel group (LCG) as the granularity; and
the terminal reporting the BSR with a logical channel as the granularity.

8. The method according to claim 1, wherein sending the buffer status report (BSR) comprising assistance information to an access network device comprises:
sending the BSR to the access network device based on a reporting manner with an LCG as a granularity;
or,
sending the BSR to the access network device based on a reporting manner with a single logical channel as the granularity.

9. The method according to claim 1, further comprising:
sending reference information to the access network device,
wherein the reference information indicates the terminal supporting or not supporting an ability to report the BSR; and/or, the reference information indicates the terminal expecting or not expecting to report the BSR.

10. A method for reporting a BSR, performed by an access network device, and the method comprising:
receiving a buffer status report (BSR) comprising assistance information sent by a terminal;
wherein the assistance information assists the access network device in performing data scheduling of a predefined service.

11. The method according to claim 10, wherein the assistance information indicates an urgency degree of scheduling data of the predefined service.

12. The method according to claim 11, wherein the predefined service is an extended reality XR service.

13. The method according to claim 11, wherein the assistance information is used by a network to determine a scheduling priority of scheduling the data of the predefined service.

14. The method according to claim 10, wherein the assistance information is carried by a predetermined information field of a media access control (MAC) control unit (CE) for sending the BSR.

15. The method according to claim 14, wherein the assistance information is associated with a predetermined logical channel identifier (LCID).

16. The method according to claim 10, further comprising:
sending configuration information to the terminal;
wherein the configuration information indicates the terminal to report the BSR.

17. The method according to claim 16, further comprising:
receiving reference information sent by the terminal;
wherein the reference information indicates the terminal supporting or not supporting an ability to report the BSR; and/or, the reference information indicates the terminal expecting or not expecting to report the BSR;
determining the configuration information based on the reference information.

18. The method according to claim 17, wherein the configuration information indicates one of:
the terminal reporting the BSR with the terminal as a granularity;
the terminal reporting the BSR with a logical channel group (LCG) as the granularity; and
the terminal reporting the BSR with a logical channel as the granularity.

19. The method according to claim 10, wherein receiving a buffer status report (BSR) comprising assistance information sent by a terminal comprises:
receiving the BSR sent by the terminal based on a reporting manner with an LCG as a granularity;
or,
receiving the BSR sent by the terminal based on a reporting manner with a single logical channel as the granularity.

20. An apparatus for reporting a BSR, comprising:
a sending module, configured to send a buffer status report (BSR) comprising assistance information to an access network device,
wherein the assistance information assists the access network device in performing data scheduling of a predefined service.

21. An apparatus for reporting a BSR, comprising:
a receiving module, configured to receive a buffer status report (BSR) comprising assistance information sent by a terminal;
wherein the assistance information assists the access network device in performing data scheduling of a predefined service.

22. A communication device, comprising:
an antenna;
a memory; and
a processor, connected to the antenna and the memory respectively, configured to control transmission and reception of the antenna by executing computer executable instructions stored on the memory, and capable of implementing the method provided in any one of claims 1 to 9 or 10 to 19.

23. A computer storage medium, having computer executable instructions stored thereon, wherein the computer executable instructions are capable to implement the method provided in any one of claims 1 to 9 and 10 to 19 after being executed by a processor.
